# EUROPÄISCHE PATENTSCHRIFT

(11) **EP 2 795 266 B1**
(45) Veröffentlichungstag und Bekanntmachung des Hinweises auf die Patenterteilung: **11.03.2020**
(21) Anmeldenummer: 12790469.6
(22) Anmeldetag: 08.11.2012
(51) Int. Cl.: G01F 15/04, G01F 11/02, B01F 15/04, G01F 11/00, G01F 22/02, G01F 15/00

(54) **VERFAHREN ZUM DOSIEREN EINES FLUIDEN MEDIUMS**
METHOD FOR DOSING A FLUID
PROCÉDÉ DE DOSAGE D'UN FLUIDE

(30) Priorität: 23.12.2011 DE 102011122268
(43) Veröffentlichungstag der Anmeldung: 29.10.2014
(73) Patentinhaber: Promera GmbH & Co. Kg, 97526 Sennfeld (DE)
(72) Erfinder: SCHÜTZE, Thomas, 97453 Schonungen (DE)
(74) Vertreter: Lenzing Gerber Stute
(86) Internationale Anmeldenummer: PCT/EP2012/072159
(87) Internationale Veröffentlichungsnummer: WO 2013/091992

(56) Entgegenhaltungen:
- EP-A1- 0 576 762
- DE-T2- 69 026 273
- US-A1- 2002 107 501
- US-A1- 2003 019 885

## Beschreibung

Die vorliegende Erfindung betrifft ein Verfahren zum Dosieren eines fluiden Mediums mittels einer Dosiervorrichtung in Form einer Kolbenpumpe mit Zylinder und verstellbarem Kolben, wobei der Zylinder und der Kolben einen Arbeitsraum bilden.

In den verschiedensten Industriebereichen, z.B. Gummiherstellung, Lebensmittelherstellung, etc., werden Mischungen im Batchbetrieb hergestellt, bei denen verschiedenste Flüssigkeiten einem Mischer zudosiert werden. Der Mischer soll in einem Mischprozess Feststoffe und Flüssigkeiten zu einer homogenen Masse vermischen. Um reproduzierbare Massen zu erzeugen, benötigt der Hersteller neben den abgewogenen Feststoffen eine oder mehrere genau dosierte Flüssigkeiten bzw. Fluide als Zugabe, um dem dann in einem späteren Prozess zu fertigenden Endprodukt bestimmte Eigenschaften zu geben.

Für die zu dosierenden Flüssigkeiten sind u.a. Wägesysteme bekannt. Dabei werden über getrennte Zuleitungen verschiedene Fluide, insbesondere Flüssigkeiten, nacheinander in einen Zwischenbehälter dosiert und abgewogen, um sie dann als Ganzes über eine geeignete Förderpumpe dem Mischer zuzuführen. Bei einem Batchwechsel, also einer anderen neu herzustellenden Mischung, ist die Zuführleitung noch mit der alten Rezeptur gefüllt. Dies bedeutet, dass eine sogenannte Zwischenmischung entsteht, die eben nicht der Vorgängermischung bzw. der neuen Mischung entspricht.

Es sind auch kombinierte Wäge- und Kolbensysteme am Markt bekannt, bei denen zuerst ein Behälter auf einer Waage mit der entsprechenden Menge einer Flüssigkeit für eine bestimmte Mischung gefüllt wird, danach diese Flüssigkeit aus dem Wägebehälter mittels einer Förderpumpe in einem sogenannten Dosierzylinder zwischengelagert und bezogen auf die gewünschte Menge nochmals kontrolliert wird, um sie anschließend dem Mischer nach der Schussfreigabe zuzuführen. Dieses Verfahren ist also ein kombiniertes gravimetrisch und volumetrisch arbeitendes Dosiersystem (siehe z. B. US 2003/0019885 A1).

Ebenfalls bekannt sind Kolbendosiersysteme, die mittels eines Massedurchflussmesssystems geregelt bzw. gesteuert werden. Diese nach dem Coriolisprinzip funktionierenden Messsysteme sind aber im rauen Industriebetrieb, insbesondere durch Erschütterungen bzw. Vibrationen, oft nicht genau genug oder verfälschen das Ergebnis bei einem Schussbetrieb, da die Systeme elektronisch bzw. softwareseitig geglättet oder gefiltert Werden müssen.

Die vorbeschriebenen Systeme basieren vorwiegend auf der gravimetrischen Dosierung bzw. Messung mit den im Industriebereich bekannten Vor- und Nachteilen.

Kolbendosierverfahren unter Verwendung eines Kolbens mit einem axial verlaufenden Durchgangskanal sind aus US 2002/0107501 A1 und EP 0 576 762 A1 bekannt. DE 690 26 273 T2 offenbart ein Durchflussmessverfahren für eine Kolbenpumpe. Dabei kann die Verdichtbarkeit der flüssigen Phase durch Messung der Temperatur und des Drucks im Arbeitsraum berücksichtigt werden.

Aufgabe des neuen Verfahrens ist eine hochgenaue volumetrische Dosierung zu ermöglichen.

Diese Aufgabe wird erfindungsgemäß mit einem Verfahren mit den Merkmalen des Anspruchs 1 gelöst. Weitere vorteilhafte Ausbildungen ergeben sich durch die Merkmale der Unteransprüche.

Die Mischrezepte geben in der Regel keine Volumenangaben sondern Gewichtsangaben für die einzelnen Bestandteile der Mischung vor. Bei Verwendung einer Kolbenpumpe als Dosiervorrichtung kann diese jedoch lediglich ein bestimmtes Volumen dosieren. Die Dichte des zu dosierenden fluiden Mediums ändert sich jedoch mit der Temperatur und dem Druck, unter dem es im Arbeitsraum der Kolbenpumpe ausgesetzt ist. Das erfindungsgemäße Verfahren bestimmt jedoch beim Dosiervorgang die Temperatur des in den Arbeitsraum strömenden fluiden Mediums. Optional kann auch noch das im Arbeitsraum befindliche Gasvolumen bestimmt werden. Da sich das Volumen des Mediums mit der Temperatur ändert, kann bei bekannter Temperatur das erforderliche Fördervolumen, welches der Gewichtsvorgabe für das Medium entspricht, und damit eine einzustellende Dosierstartposition des Kolbens berechnet werden.

Beim erfindungsgemäßen Verfahren wird deshalb zunächst der Arbeitsraum der Dosiervorrichtung mit einer Füllmenge befüllt, deren Volumen größer ist als das zu dosierende Fördervolumen. Nachdem die Temperatur der Füllmenge bestimmt worden ist, kann das zu dosierende Fördervolumen bestimmt werden. Das überschüssige Fluid wird durch Verfahren des Kolbens in die Dosierstartposition über ein geöffnetes Ventil aus dem Arbeitsraum abgelassen und kann in den Vorratsbehälter zurückgefördert werden. Sofern das Ventil an der obersten Position des Arbeitsraumes angeordnet ist, wird gleichzeitig im Arbeitsraum befindliches Gas oder Luft beim Verfahren des Kolbens in die Dosierstartposition aus dem Arbeitsraum gedrückt, sofern sich das Gas im oberen Bereich des Arbeitsraumes angesammelt hat.

Das erfindungsgemäße Verfahren sieht zudem vor, dass die Gasbeladung des Füllmediums bestimmt wird, wodurch sich eine noch genauere Dosierung erreichen lässt. Die Bestimmung bzw. Abschätzung des in der Füllmenge befindlichen Gases lässt sich vorteilhaft über einen zusätzlichen Verfahrensschritt ermitteln, bei dem die in den Arbeitsraum geförderte Füllmenge mittels des Kolben bei geschlossenen Ventilen unter einen bestimmten Druck gesetzt wird. Anhand des Verfahrweges des Kolbens kann die Gasbeladung ermittelt werden, welche dann bei der Berechnung der Dosierstartposition berücksichtigt wird.

Vorteilhaft ist die Kolbenpumpe der Dosiervorrichtung derart angeordnet, dass der Kolben in vertikaler Richtung rauf und runter bewegt wird. Diese Anordnung ermöglicht das Anordnen des Ventils zum Entfernen der überschüssigen Füllmenge bzw. der im Arbeitsraum eingeschlossenen unerwünschten Gase am höchsten Punkt. Sofern der Arbeitsraum beim Verfahren des Kolbens nach oben verkleinert wird, ist somit das Ventil in der unteren Bodenwandung des Zylinders anzuordnen. Sofern der Arbeitsraum beim Verfahren des Kolbens nach unten verkleinert wird, ist das Ventil im Kolben selbst anzuordnen.

Selbstverständlich ist es möglich, dass mit einer Dosiervorrichtung mehr als ein fluides Medium dosiert wird. Hierzu sind entsprechend der Anzahl der zu dosierenden Medien eine entsprechende Anzahl von Zuleitungen und Absperrventilen vorzusehen. Auch sind entsprechende Anzahlen von Auslassleitungen und Ventilen vorzusehen, sofern die überschüssigen Medien beim Verfahren des Kolbens in die Dosierstartposition wieder zurück in die entsprechenden Vorratsbehälter gefördert werden sollen.

Das erfindungsgemäße Verfahren weist somit die Vorteile der gravimetrischen Dosierung auf und übertrifft diese in der Genauigkeit, da Temperaturschwankungen und Gaseinschlüsse im zu dosierenden Medium berücksichtigt werden. Durch das Vorsehen von eigenen Verbindungsleitungen zwischen nachgeordnetem Mischer und Arbeitsraum für jede Einzelkomponente werden vorteilhaft undefinierte Zwischenmischungen von verschiedenen Fluiden vermieden.

Die Kolbenpumpe als Dosierzylinder kann vorteilhaft über einen Hydraulikzylinder angetrieben werden, der wiederum über ein geeignetes Messsystem und einem hydraulischen Positionierventil in seiner Längs- bzw. Auf-/Abbewegung genau positioniert werden kann.

Nachfolgend wird das erfindungsgemäße Verfahren anhand von Zeichnungen näher erläutert.

Es zeigen:
- Fig. 1:: Dosiervorrichtung mit nachgeordnetem Mischer;
- Fig. 2:: Einspritzöffnung eines Mischers nach dem Stand der Technik;
- Fig. 3:: Erfindungsgemäße Zuführleitung zum Mischer.

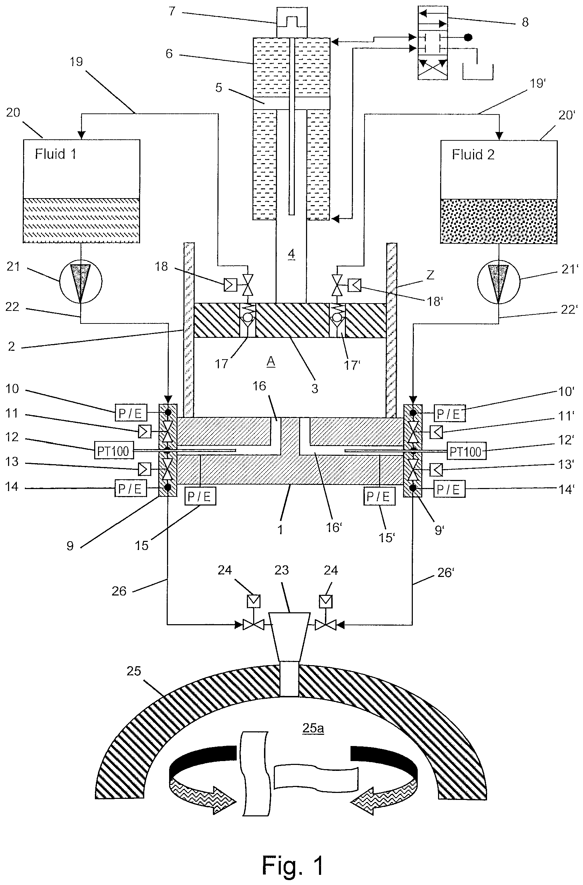

Die Figur 1 zeigt eine Dosiervorrichtung mit nachgeordnetem Mischer 25 für das erfindungsgemäße Verfahren. Ein Dosiervorgang beginnt mit dem Befüllen des Dosierzylinders 2 mit einer bestimmten Füllmenge, die größer ist als die zu dosierende Menge. Dabei wird das zu dosierende Fluid über eine externe Druckquelle, z.B. in Form einer Pumpe 21, oder mittels der Dosiervorrichtung 2 selbst, über ein Befüllventil 11 in den Arbeitsraum A gefördert. Die Dosiervorrichtung 2 weist einen Zylinder Z auf, der mit einem Zylinderboden 1 verbunden ist. In dem Zylinder Z ist der Kolben 3 angeordnet, welcher von einem Kolbenzylinder-System 5, 6 über eine Kolbenstange 4 angetrieben ist. Die Position des Kolbens 5 des Kolbenzylinder-Systems 5, 6 wird mittels des Wegsensors 7 ermittelt. Mittels des Steuerungsventils 8 kann somit die genaue Position des Kolbens 5 vorgegeben werden, wodurch auch der mit ihm starr gekoppelte Kolben 3 der Dosiervorrichtung genau positioniert werden kann.

Die in Figur 1 dargestellte Dosiervorrichtung kann die beiden Fluide 1 und 2, welche in den Vorratsbehältern 20, 20' gelagert sind, genau dosiert in den Mischraum 25a des nachgeordneten Mischers 25 fördern. Die Fluide 1 und 2 werden mittels der Förderpumpen 21, 21' über die Zuführleitungen 22, 22' und die Einlassventile 11, 11' in die im Zylinderboden 1 befindlichen Zuführkanäle 16, 16' von unten in den Arbeitsraum A der Dosiervorrichtung 2 gefördert. Drucksensoren 10, 10' überwachen, ob ein genügend großer Druck in den Zuführleitungen 22, 22' aufgebaut werden kann, womit die Dichtigkeit der Zuführleitungen 22, 22' geprüft werden kann. Die Temperatursensoren 12, 12' messen beim Befüllvorgang kontinuierlich die Temperatur der Füllmenge wodurch deren durchschnittliche Temperatur bestimmt werden kann. Beim Befüllen des Arbeitsraumes A wird der Kolben 3 aktiv nach oben gefahren. Dabei wird darauf geachtet, dass der Kolben 3 nicht zu schnell nach oben gefahren wird, damit kein Vakuum entsteht. Würde ein Vakuum entstehen, könnten flüchtige Anteile im zu dosierenden Fluid verdampfen. Der anschließende Messvorgang würde diesen Befüllfehler erkennen und den anstehenden Dosiervorgang abbrechen.

Im Kolben 3 sind Durchgangskanäle 17, 17' angeordnet, in denen optional ein Rückschlagventil angeordnet werden kann. Jeder Durchgangskanal 17, 17' ist mit einer Rückführleitung 19, 19' verbunden, in der jeweils ein gesteuertes Ventil 18, 18' angeordnet ist. Über die Rückführleitungen 19, 19' wird das überschüssige Fluid in seinen zugehörigen Vorratsbehälter 20, 20' zurückgefördert.

Die Dosiervorrichtung weist ferner für jedes Fluid 1 bzw. 2 eine Verbindungsleitung auf, die jeweils einen Einlasskanal 16, 16' mit der Zuführleitung 23 des Mischers 25 verbindet, wobei am Anfang und am Ende der Zuführleitung 26, 26' jeweils ein gesteuertes Ventil 13, 24 bzw. 13', 24' angeordnet ist. Mittels der Ventile 13, 13' wird verhindert, dass beim Befüllen des Arbeitsraumes A Fluid von der Zuführleitung 22, 22' in die Verbindungsleitung 26, 26' gelangt. Die Ventile 24, 24' dienen dazu, dass beim Fördern eines dosierten Fluides in den Mischerraum 25a das geförderte Fluid nicht in die andere Verbindungsleitung gelangt. Die beschriebene Dosiervorrichtung weist eine nicht dargestellte Steuerung auf, in der die Rezeptur für den anstehenden Batch gespeichert ist. Die zu dosierende Menge eines bestimmten Fluides ist in der Regel in der Maßeinheit g oder kg hinterlegt und somit bekannt.

Beim erfindungsgemäßen Verfahren wird nicht die Masse des Fluides sondern deren Dichte über die Temperatur und optional auch über das im Fluid enthaltene Gasvolumen ermittelt.

Das erfindungsgemäße Verfahren sieht vor, dass stets eine geringe Zusatzmenge von ca. 2 bis 10% mehr in den Arbeitsraum A gefördert wird als tatsächlich benötigt wird. Durch diese Zusatzmenge wird sichergestellt, dass beim Ermitteln der Dichte der Füllmenge im Arbeitsraum A nicht festgestellt wird, dass die aktuelle Füllmenge tatsächlich nicht kleiner ist als die zu dosierende Menge. Die Größe der Zusatzmenge kann fest vorgegeben werden. Es ist jedoch auch möglich, dass sie adaptiv eingestellt wird. D.h., das System kann anhand der vorhergehenden Ermittlungen der Dichte lernen, und so die Zusatzmenge für das jeweilige Fluid einstellen, so dass diese nicht zu groß gewählt wird.

Nach dem Befüllen des Dosierzylinders Z schließt das Befüllventil 11, 11' am Zylinderboden 1. Durch Herabfahren des Materialkolbens 3 wird nun die Kompressibilität des im Arbeitsraum A befindlichen Fluides über den Weg der Kolben 3, 5 und der Erfassung des Drucks mittels des Drucksensors 15, 15' im Fluid überprüft und gemessen. Dabei lässt sich feststellen, ob möglichweise Luft- bzw. Gaseinschlüsse im zu messenden Fluid vorhanden sind. All diese Informationen, wie Temperatur und Gasbeladung bzw. Kompressibilität des Fluides, Dichtewerte über die Temperatur, welche in der Steuerung hinterlegt sind, werden nun verrechnet in der Form, dass die genaue Position der Kolben 3, 5 für die gewünschte und in der Rezeptur hinterlegte Dosiermenge berechnet wird. Ist diese Dosierstartposition dann berechnet, öffnet ein Materialventil 18, 18' im Materialkolben 3 und der Hydraulikzylinder 5, 6 fährt in die berechnete Position. Dabei drückt der Materialkoben 3 über das geöffnete Ventil die überfüllte Menge über die Rückführleitung 19, 19' weitestgehend drucklos in den Materialbehälter 20, 20' zurück. Ist die errechnete Dosierstartposition erreicht, schließt das Ventil 18, 18' im Materialkolben 3. Die in der Rezeptur hinterlegte Dosiermenge ist nun eingestellt und für den nächsten Schuss in den Mischer 25 vorbereitet.

Damit das überfüllte Fluid und mögliche Luft-/Gaseinschlüsse aus dem Dosierzylinder weggefördert werden können, ist der Auslass am höchsten Punkt im Arbeitsraum A anzuordnen, da Luft/Gase nach oben steigen. Sofern der Arbeitsraum A beim Herunterfahren des Kolbens 3 verkleinert wird, ist der Auslass in Form des Durchgangskanals 17 somit im Kolben 3 anzuordnen. Sofern der Arbeitsraum A beim Herauffahren des Kolbens 3 verkleinert wird, ist der Auslass in Form des Durchgangskanals 17 im Zylinderboden 1 anzuordnen.

Wird nun das Signal zum Dosieren von der Mischsteuerung gegeben, öffnet das Auslassventil 13, 13' im Zylinderboden 1 und der Kolben 3 fährt mit einer gewünschten Geschwindigkeit nach unten und drückt somit das Fluid in den Mischer 25. Ist die unterste Position des Kolbens 3 erreicht, befindet sich die gewünschte Menge des Fluides im Mischerraum 25a des Mischers 25.

Der Kolben 3 liegt in der untersten Position möglichst komplett am Zylinderboden 1 an, so dass der Arbeitsraum möglichst vollständig entleert ist. Dadurch ist im Prinzip kein Fluidrest mehr im Dosierzylinder vorhanden. Dieser Umstand ermöglicht es nun, mehrere, d.h. auch mehr als zwei, verschiedene Flüssigkeiten/Fluide mittels des Dosierzylinders zu dosieren, wodurch Anschaffungskosten verringert werden. Allerdings ist jedes Fluid mit einem eigenen Eingangsventil 11, Ausgangsventil 13, welche vorteilhaft im Zylinderboden 1 angeordnet sind sowie einem Materialventil 18 im Materialkolben 3 sowie eigenen Drucksensoren 10, 14, 15 und Temperatursensoren 12 ausgestattet, damit alle Zuführleitungen 22, Dosierleitungen 26 und Rückführleitungen 19 immer mit demselben Fluid kontaminiert sind.

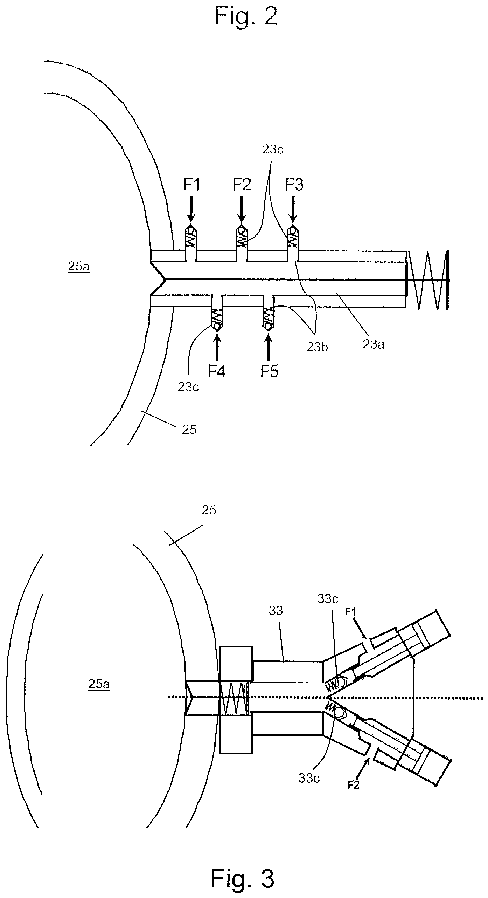

An den heute bekannten Mischern sind in der Regel 4 oder 6 Einspritzöffnungen vorhanden. Wenn nun rezepturabhängig mehr als 4 oder 6 Flüssigkeiten gleichzeitig oder nacheinander, also zeitversetzt, dem Mischer 25 zugeführt werden sollen, müssen an einer Einspritzöffnung 23 auch mehrere Fluide angeschlossen werden können. Ein aus dem Stand der Technik bekanntes Einspritzrohr 23 ist in Figur 2 dargestellt. Die Einspritzöffnung 23 weist ein Anschlussrohr 23a auf, bei der axial versetzt fünf Fluidanschlüsse 23b vorgesehen sind. Jeder Fluidanschluss 23b weist ein Rückschlagventil 23c auf, welches so angeordnet ist, dass das zu dosierende Fluid zum Mischer fließen aber nicht in eine andere Fluidzuführleitung 26 gelangen kann. Dies funktioniert nur so lange, wie alle Rückschlagventile 23c einwandfrei funktionieren. Sollten aber die Rückschlagventile 23c undicht sein, kann das zu dosierende Fluid durch den herrschenden Dosierdruck in eine andere drucklose Zuführleitung 26 gedrückt werden. Dabei entstehen ungewollte und nicht bekannte "Vermischungen" innerhalb der an einem Einspritzrohr 23a angeschlossenen Zuführleitungen 26. Die Rezepturvorgaben sind dann nicht mehr in der gewünschten Genauigkeit einzuhalten. Des Weiteren sind durch den axialen Versatz der Fluidanschlüsse 23b bei einem Rezepturwechsel unterschiedlich verbleibende Restmengen in dem Einspritzrohr 23a. Auch dieser Umstand führt zumindest beim ersten Schuss einer neuen Rezeptur zu nicht definierten Rezepturverschiebungen.

Die Erfindung schlägt hierfür eine neu entwickelte Einspritzsöffnung 33 vor, welche eine Vielzahl von Anschlüssen für unterschiedliche Fluide aufweisen kann. So können sechs oder mehr Fluide dem Mischer über eine Dosiervorrichtung zu dosiert werden. Die Einspritzöffnung 33 zeichnet sich dadurch aus, dass die Kanallänge für jedes Fluid vom Anschlusspunkt in den Mischerraum 25a möglichst kurz und gleich lang ist. Alle Fluidanschlüsse 33b sind radial in der Form angeordnet, dass für jedes Fluid in der Einspritzöffnung 33 das gleiche Wechselvolumen besteht. Des Weiteren ist in jedem Fluidkanal 33b ein Rückschlagventil 33c angeordnet. Oberhalb eines jeden Rückschlagventils kann zusätzlich ein gesteuertes Fluidventil 24 eingebaut werden, um eben einen Fluidkanal aktiv zu öffnen und auch zu schließen. Durch den Drucksensor 14 am Ausgang der Dosiervorrichtung, wird der Zustand der Verbindungsleitung 26 und des korrespondierenden Fluidventils 24 jederzeit auf Dichtheit und korrekter Funktion überprüft. Somit wird über die Auswertung der Drücke in der Steuerung rechtzeitig eine Information erzeugt, entsprechende Wartungen vorzunehmen. Außerdem lassen sich Fehldosierungen oder ungewollte Vermischungen zwischen den Fluiden verhindern.

Nach einem Dosiervorgang kann weiterhin ein Restdruck in der Verbindungsleitung 26 durch die aktiv gesteuerten Ventile 14, 24 eingespannt bleiben. Fällt oder steigt nun dieser eingeschlossene Druck im weiteren Verlauf, sind entsprechende Rückschlüsse auf diesen Fluidstrang bezogen, zu generieren.

Durch das Gesamtsystem Dosiervorrichtung und Einspritzöffnung bzw. - ventil 33, insbesondere durch den weiteren Einsatz eines aktiv gesteuerten Fluidventils 24, lassen sich somit Prozessstabilität und Reproduzierbarkeit von Rezepturen erhöhen und rechtzeitig eingeleitete Wartungshinweise generieren.

Nachfolgen wird der Ablauf eines möglichen Zyklus mit Entlüftung des Gasvolumens eingehend beschrieben:
1. Der Kolben 3 steht unten auf Zylinderboden 1. Das Fluidbefüllventil 11 wird geöffnet. Über den Drucksensor 10 wird der anstehende Förderdruck der Förderpumpe 21 gemessen. Bei ausreichendem Fluiddruck fährt der Fluidkolben 3 so schnell nach oben, dass über den Drucksensor 15 kein Vakuum festgestellt wird, so dass keine Verdampfungsgefahr des Fluides besteht;
2. Während des Befüllvorgangs wird über den Temperatursensor 12 ständig die Fluidtemperatur der Füllmenge gemessen und damit die durchschnittliche Temperatur des im Zylinder 2 befindlichen Fluides berechnet;
3. Durch die errechnete Temperatur der Füllmenge wird über die Dichteänderung des Fluides das korrigierte Dosiervolumen und damit die notwendige Startposition des Kolbens 3 errechnet;
4. Die Startposition plus einer festgelegten Überfüllmenge bzw. Zusatzmenge ergibt die anzufahrende Befüllposition;
5. Ist die anzufahrende Befüllposition erreicht, schließt das Fluidbefüllventil 11. Die Position des Kolbens 5 und damit die Position des Kolbens 3 wird über die Wegmessung 7 ständig ermittelt;
6. Das nun komplett geschlossene Zylindersystem (1, 2 und 3), d.h. der komplett geschlossene Arbeitsraum A, wird nun unter einen bestimmten Druck gesetzt in der Form, dass der Fluidkolben 3 nach unten fährt. Der Druck wird dabei kontinuierlich mittels des Drucksensors 15 gemessen;
7. Ist der Prüf- bzw. Messdruck im Arbeitsraum A erreicht, ist auch der Kompressionsweg durch den Wegsensor 7 bekannt. Mit diesem Wert lässt sich die Gasbeladung und somit die letztendlich richtige Dosierstartposition errechnen;
8. Danach wird durch Herauffahren des Fluidkolbens 3 der Raum entspannt;
9. Bei geöffnetem Überfüllventil 18 wird nun die errechnete und korrigierte Dosierstartposition des Kolbens 3 angefahren;
10. Ist die Dosierstartposition erreicht, schließt das Überfüllventil 18;
11. Der Fluidkolben 3 fährt nun nach unten auf den gewünschten Dosierstartdruck und wartet auf das Signal des Mischers 25, das Fluid über die Verbindungsleitung 26 in den Mischerraum 25a des Mischers 25 einzuschießen;
12. In dieser "Druckposition" werden alle Ventile 11, 13 und 17 sowie Dichtungen auf Dichtheit überprüft;
13. Kommt das Signal von der Mischsteuerung, das Fluid einzuspritzen, öffnen die Ventile 13 und 24 und der Fluidkolben 3 fährt mit einer vorgegebenen Geschwindigkeit, welche über die in der Rezeptur hinterlegte Einspritzzeit für dieses Fluid errechnet wird, nach unten;
14. Ist die untere "Leerposition" erreicht, bleiben die Ventile 13 und 24 mit einer vorgegebenen Verweilzeit weiterhin geöffnet;
15. Nach Ablauf dieser Zeit werden die Ventile 13 und 24 geschlossen und der nächste Befüllvorgang kann beginnen.

## Patentansprüche

1. Verfahren zum Dosieren eines fluiden Mediums mittels einer Dosiervorrichtung in Form einer Kolbenpumpe mit Zylinder (Z) und verstellbarem Kolben (3), wobei der Zylinder (Z) und der Kolben (3) einen Arbeitsraum (A) bilden, **dadurch gekennzeichnet, dass**
- in einem ersten Verfahrensschritt eine bestimmte Einfüllmenge des fluiden Mediums in den Arbeitsraum (A) gefördert wird, wobei die Einfüllmenge größer ist als die vorgegebene zu dosierende Menge, und dass
- in einem weiteren Verfahrensschritt der Kolben (3) soweit den Arbeitsraum (A) verkleinert, so dass im Arbeitsraum (A) die zu dosierende Menge verbleibt, wobei gleichzeitig ein Ventil (18, 18') geöffnet ist, so dass das im Arbeitsraum (A) separierte Gasvolumen
und/oder das überschüssige fluide Medium durch den Kolben aus
dem Arbeitsraum (A) herausströmen kann, wobei hierzu der Kolben
(3) mindestens einen axial verlaufenden Durchgangskanal (17, 17')
aufweist, der mit einer Rückführleitung (19, 19') verbunden ist, und
in dem Durchgangskanal (17, 17') und/oder der Rückführleitung (19, 19') mindestens das steuerbare Ventil (18, 18') und/oder ein Rückschlagventil angeordnet ist.

2. Verfahren nach Anspruch 1, **dadurch gekennzeichnet, dass** die Temperatur des im Arbeitsraum (A) befindlichen Mediums, insbesondere beim Einfördern in den Arbeitsraum (A) während des ersten Verfahrensschrittes, ermittelt wird.

3. Verfahren nach Anspruch 1 oder 2, **dadurch gekennzeichnet, dass** die Dichte des im Arbeitsraum (A) befindlichen fluiden Mediums ermittelt und/oder das in der Einfüllmenge befindliche Gasvolumen geschätzt oder ermittelt wird, wonach dann in dem weiteren Verfahrensschritt durch Verstellen des Kolbens (3) der Arbeitsraum soweit verkleinert wird, dass sein Volumen der zu dosierenden Menge entspricht.

4. Verfahren nach einem der Ansprüche 1 bis 3, **dadurch gekennzeichnet, dass** vor dem weiteren Verfahrensschritt zur Abschätzung oder Berechnung des in der Einfüllmenge befindlichen Gasvolumens
- entweder mittels des Kolbens (3) eine Druckerhöhung im Arbeitsraum (A) eingestellt wird, wobei gleichzeitig die vom Kolben (3) zurückgelegte Wegstrecke ermittelt wird
- oder alternativ der Kolben (3) um eine bestimmte Wegstrecke zur Druckerhöhung im Arbeitsraum (A) verstellt und das dabei die Druckerhöhung ermittelt wird, und dass
- anhand der Wegstrecke des Kolbens (3) und der Druckänderung eine Abschätzung oder Berechnung des in dem fluidem Medium befindlichen Gasvolumens, insbesondere Luftvolumens, erfolgt.

5. Verfahren nach Anspruch 4, **dadurch gekennzeichnet, dass** die Temperaturänderung während der vorhergehenden Druckerhöhung ermittelt wird und bei der Abschätzung oder Berechnung des in dem fluiden Medium befindlichen Gasvolumens berücksichtigt wird.

6. Verfahren nach einem der Ansprüche 1 bis 5, **dadurch gekennzeichnet, dass** die zu dosierende Menge an fluidem Medium für eine bestimmte Temperatur und in einer Gewichtseinheit, insbesondere g oder kg, vorgegeben ist, und dass anhand der im weiteren Verfahrensschritt ermittelten Temperatur und des Drucks im Arbeitsraum (A) und/oder des ermittelten Gasvolumens des im Arbeitsraum (A) befindlichen fluiden Mediums das Volumen und/oder die Kolbenposition berechnet wird, welche der zu dosierenden Menge entspricht, wobei im dritten Verfahrensschritt bei geöffnetem Ventil das Arbeitsraumvolumen oder die Kolbenposition eingestellt wird.

7. Verfahren nach einem der Ansprüche 1 bis 6, **dadurch gekennzeichnet, dass** die Kolbenpumpe derart angeordnet ist, dass Ventil (18, 18') am höchsten Punkt des Arbeitsraumes (A) angeordnet ist, wobei insbesondere der Kolben (3) in vertikaler Richtung bewegt wird.

8. Verfahren nach einem der vorhergehenden Ansprüche, **dadurch gekennzeichnet, dass** in den Arbeitsraum (A) der Kolbenpumpe über mindestens eine Versorgungsleitung (22, 22') mindestens ein fluides Medium förderbar ist, wobei das fluide Medium aus einem Vorratsbehälter (20, 20') mittels einer weiteren Pumpe (21, 21') gefördert oder mittels der Kolbenpumpe selbst in den Arbeitsraum (A) gesaugt wird.

9. Verfahren nach Anspruch 8, **dadurch gekennzeichnet, dass** in jeder Versorgungsleitung (22) ein gesteuertes Ventil (11) und/oder ein Rückschlagventil angeordnet ist.

10. Verfahren nach einem der vorhergehenden Ansprüche, **dadurch gekennzeichnet, dass** die Dosiervorrichtung die dosierte Menge des fluiden Mediums über mindestens eine Verbindungsleitung (26, 26') in einen nachgeordneten Mischer (25) in einem dem weiteren Verfahrensschritt nachgeordneten Verfahrensschritt fördert, in dem der Kolben (3) den Arbeitsraum (A) auf sein Minimum verkleinert.

11. Verfahren nach einem der vorhergehenden Ansprüche, **dadurch gekennzeichnet, dass** in jeder Verbindungsleitung (26, 26') zum Mischer (25) mindestens ein gesteuertes Ventil (13, 23; 14', 24') und/oder ein Rückschlagventil angeordnet ist.

12. Verfahren nach einem der vorhergehenden Ansprüche, **dadurch gekennzeichnet, dass** mindestens ein Drucksensor (10, 10'; 15, 15') den Druck im Arbeitsraum (A) und/oder in einer Zuführleitung (22, 22') zum Arbeitsraum (A) ermittelt, wobei der gemessene Druck insbesondere zur Bestimmung der Dichte und/oder der Bestimmung oder Abschätzung des Gasvolumens im fluiden Medium verwendet wird.

13. Verfahren nach dem vorhergehenden Anspruch, **dadurch gekennzeichnet, dass** durch die Kolbenbewegung im weiteren Verfahrensschritt das fluidem Medium und/oder Gas aus dem Arbeitsraum (A) in die Rückführleitung (19, 19') und in einen Vorratsbehälter (20, 20') gelangt.

14. Verfahren nach einem der vorhergehenden Ansprüche, **dadurch gekennzeichnet, dass** ein Drucksensor (14, 14') den Druck in der Verbindungsleitung (26, 26') zum nachgeordneten Mischer (25) misst.

## Claims

1. Method for metering a fluid medium by means of a metering device in the form of a piston pump having a cylinder (Z) and an adjustable piston (3), wherein the cylinder (Z) and the piston (3) form a working space (A), **characterised in that**
- in a first method step, a specific filling quantity of the fluid medium is conveyed into the working space (A), wherein the filling quantity is greater than the predetermined quantity to be conveyed, and **in that**
- in another method step, the piston (3) reduces the working space (A) to such an extent that the quantity to be metered remains in the working space (A), wherein at the same time a valve (18, 18') is opened so that the separated gas volume in the working space (A) and/or the excess fluid medium can flow through the piston out of the working space (A), wherein to this end the piston (3) has at least one axially extending through-channel (17, 17') which is connected to a return line (19, 19') and at least the controllable valve (18, 18') and/or a non-return valve is arranged in the through-channel (17, 17') and/or the return line (19, 19').

2. Method according to claim 1, **characterised in that** the temperature of the medium located in the working space (A), in particular during conveying into the working space (A), is determined during the first method step.

3. Method according to claim 1 or claim 2, **characterised in that** the density of the fluid medium located in the working space (A) is determined and/or the gas volume located in the filling quantity is estimated or determined, after which in the additional method step the working space is then reduced by adjusting the piston (3) to such an extent that the volume thereof corresponds to the quantity to be metered.

4. Method according to any one of claims 1 to 3, **characterised in that**, prior to the additional method step for the estimation or calculation of the gas volume in the filling quantity,
- either using a piston (3) a pressure increase is adjusted in the working space (A), wherein at the same time the distance travelled by the piston (3) is determined,
- or alternatively the piston (3) is adjusted by a specific distance in order to increase the pressure in the working space (A) and the pressure increase is determined in this instance, and **in that**,
- using the distance of the piston (3) and the pressure change, an estimation or calculation of the gas volume located in the fluid medium, in particular air volume, is carried out.

5. Method according to claim 4, **characterised in that** the temperature change during the previous pressure increase is determined and is taken into account when the gas volume in the fluid medium is estimated or calculated.

6. Method according to any one of claims 1 to 5, **characterised in that** the quantity of fluid medium which is intended to be metered is predetermined for a specific temperature and in a weight unit, in particular g or kg, and **in that**, on the basis of the temperature determined in the additional method step and the pressure in the working space (A) and/or the established gas volume of the fluid medium in the working space (A), the volume and/or the piston position which corresponds to the quantity which is intended to be metered is calculated, wherein in the third method step with the valve open the working space volume or the piston position is adjusted.

7. Method according to any one of claims 1 to 6, **characterised in that** the piston pump is arranged in such a manner that the valve (18, 18') is arranged at the highest point of the working space (A), wherein in particular the piston (3) is moved in a vertical direction.

8. Method according to any one of the preceding claims, **characterised in that** at least one fluid medium can be conveyed into the working space (A) of the piston pump by means of at least one supply line (22, 22'), wherein the fluid medium is conveyed from a storage container (20, 20') by means of another pump (21, 21') or is drawn by means of the piston pump itself into the working space (A).

9. Method according to claim 8, **characterised in that** a controlled valve (11) and/or a non-return valve is arranged in each supply line (22).

10. Method according to any one of the preceding claims, **characterised in that** the metering device conveys the metered quantity of the fluid medium by means of at least one connection line (26, 26') into a mixer (25) which is arranged downstream in a method step which is downstream of the additional method step, and in which the piston (3) reduces the working space (A) to the minimum thereof.

11. Method according to any one of the preceding claims, **characterised in that** at least one controlled valve (13, 23; 14', 24') and/or a non-return valve is/are arranged in each connection line (26, 26') to the mixer (25).

12. Method according to any one of the preceding claims, **characterised in that** at least one pressure sensor (10, 10'; 15, 15') establishes the pressure in the working space (A) and/or in a supply line (22, 22') to the working space (A), wherein the measured pressure is used in particular to determine the density and/or to determine or estimate the gas volume in the fluid medium.

13. Method according to the preceding claim, **characterised in that**, as a result of the piston movement in the additional method step, the fluid medium and/or gas from the working space (A) reaches the return line (19, 19') and a storage container (20, 20').

14. Method according to any one of the preceding claims, **characterised in that** a pressure sensor (14, 14') measures the pressure in the connection line (26, 26') to the downstream mixer (25).

## Revendications

1. Procédé de dosage d'un milieu fluide au moyen d'un dispositif de dosage sous la forme d'une pompe à piston comprenant un cylindre (Z) et un piston (3) positionnable, le cylindre (Z) et le piston (3) formant un espace de travail, **caractérisé en ce que**
- dans une première étape du procédé, une quantité d'apport déterminée du milieu fluide est refoulée dans l'espace de travail (A), la quantité d'apport étant supérieure à la quantité à doser prédéfinie, et **en ce que**
- dans une étape supplémentaire du procédé, le piston (3) réduit l'espace de travail (A) à tel point que la quantité à doser demeure dans l'espace de travail (A), une vanne (18, 18') étant simultanément ouverte, de sorte que le volume de gaz séparé dans l'espace de travail (A) et/ou le milieu fluide en excès peut s'écouler hors de l'espace de travail (A) à travers le piston, le piston (3) possédant à cet effet au moins un canal de passage (17, 17') qui suit un tracé axial, lequel est relié à une conduite de retour (19, 19'),
et
au moins la vanne (18, 18') commandable et/ou un clapet anti-retour étant disposé dans le canal de passage (17, 17') et/ou la conduite de retour (19, 19').

2. Procédé selon la revendication 1, **caractérisé en ce que** la température du milieu qui se trouve dans l'espace de travail (A) est déterminée, notamment lors de l'injection dans l'espace de travail (A) pendant la première étape du procédé.

3. Procédé selon la revendication 1 ou 2, **caractérisé en ce que** la densité du milieu qui se trouve dans l'espace de travail (A) est déterminée et/ou le volume de gaz qui se trouve dans la quantité d'apport est estimé ou déterminé, après quoi, dans l'étape supplémentaire du procédé, l'espace de travail est réduit par positionnement du piston (3) de telle sorte que son volume correspond à la quantité à doser.

4. Procédé selon l'une des revendications 1 à 3, **caractérisé en ce qu'**avant l'étape supplémentaire du procédé, en vue d'estimer ou de calculer le volume de gaz qui se trouve dans la quantité d'apport
- soit une augmentation de la pression dans l'espace de travail (A) est réglée au moyen du piston (3), le trajet parcouru par le piston (3) étant simultanément déterminé,
- soit, en variante, le piston (3) est positionné dans l'espace de travail sur un trajet déterminé en vue d'augmenter la pression et l'augmentation de pression est alors déterminée, et **en ce que**
- une estimation ou un calcul du volume de gaz, notamment du volume d'air, qui se trouve dans le milieu fluide est effectué à l'aide du trajet du piston (3) et de la variation de pression.

5. Procédé selon la revendication 4, **caractérisé en ce que** la variation de température pendant l'augmentation de pression précédente est déterminée et prise en compte lors de l'estimation ou du calcul du volume de gaz qui se trouve dans le milieu fluide.

6. Procédé selon l'une des revendications 1 à 5, **caractérisé en ce que** la quantité de milieu fluide à doser est prédéfinie pour une température déterminée et dans une unité de poids, notamment le g ou le kg, et **en ce que** le volume et/ou la position du piston qui correspond à la quantité à doser est calculé à l'aide de la température et de la pression dans l'espace de travail (A) déterminée dans l'étape supplémentaire du procédé et/ou du volume de gaz déterminé du milieu fluide qui se trouve dans l'espace de travail (A), le volume de l'espace de travail ou la position du piston étant réglé dans la troisième étape du procédé avec la vanne ouverte.

7. Procédé selon l'une des revendications 1 à 6, **caractérisé en ce que** la pompe à piston est disposée de telle sorte que la vanne (18, 18') est disposée au point le plus haut de l'espace de travail (A), le piston (3) étant notamment déplacé dans la direction verticale.

8. Procédé selon l'une des revendications précédentes, **caractérisé en ce qu'**au moins un milieu fluide peut être refoulé dans l'espace de travail (A) de la pompe à piston par le biais d'au moins une conduite d'alimentation (22, 22'), le milieu fluide étant refoulé depuis un réservoir (20, 20') au moyen d'une pompe (21, 21') supplémentaire ou aspiré dans l'espace de travail (A) au moyen de la pompe à piston elle-même.

9. Procédé selon la revendication 8, **caractérisé en ce qu'**une vanne (11) commandée et/ou un clapet anti-retour est disposé dans chaque conduite d'alimentation (22) .

10. Procédé selon l'une des revendications précédentes, **caractérisé en ce que** le dispositif de dosage refoule la quantité dosée du milieu fluide dans un mélangeur (25) monté en aval par le biais d'au moins une conduite de liaison (26, 26') dans une étape du procédé qui suit l'étape supplémentaire du procédé, dans laquelle le piston (23) réduit l'espace de travail (A) à son minimum.

11. Procédé selon l'une des revendications précédentes, **caractérisé en ce qu'**au moins une vanne (13, 23 ; 14', 24') commandée et/ou un clapet anti-retour est disposé dans chaque conduite de liaison (26, 26') vers le mélangeur (25).

12. Procédé selon l'une des revendications précédentes, **caractérisé en ce qu'**au moins un capteur de pression (10, 10' ; 15, 15') détermine la pression dans l'espace de travail (A) et/ou dans une conduite d'arrivée (22, 22') vers l'espace de travail (A), la pression mesurée étant notamment utilisée pour la détermination de la densité et/ou pour la détermination ou l'estimation du volume de gaz dans le milieu fluide.

13. Procédé selon l'une des revendications précédentes, **caractérisé en ce que** par le mouvement du piston dans l'étape supplémentaire du procédé, le milieu fluide et/ou le gaz passe hors de l'espace de travail (A) dans la conduite de retour (19, 19') et dans un réservoir (20, 20').

14. Procédé selon l'une des revendications précédentes, **caractérisé en ce qu'**un capteur de pression (14, 14') mesure la pression dans la conduite de liaison (26, 26') vers le mélangeur (25) monté en aval.
